# EUROPÄISCHE PATENTSCHRIFT

(11) **EP 3 725 653 B1**
(45) Veröffentlichungstag und Bekanntmachung des Hinweises auf die Patenterteilung: **16.06.2021**
(21) Anmeldenummer: 19169773.9
(22) Anmeldetag: 17.04.2019
(51) Int. Cl.: B62D 65/18, B62D 65/02

(54) **TRANSPORTSKID**
TRANSPORT SKID
PATIN DE TRANSPORT

(43) Veröffentlichungstag der Anmeldung: 21.10.2020
(73) Patentinhaber: Mohr Lizenz Verwaltungs GmbH, 33607 Bielefeld (DE); Pietsch, Uwe, 79639 Grenzach-Wyhlen (DE); Meloh, Ulrich, 33789 Hameln (DE)
(72) Erfinder: Pietsch, Uwe, 79639 Grenzach-Wyhlen (DE)
(74) Vertreter: Schober, Mirko

(56) Entgegenhaltungen:
- EP-A1- 1 473 258
- CN-A- 103 447 730
- CN-A- 104 889 643
- CN-U- 202 687 383
- CN-Y- 2 928 633
- FR-A1- 2 979 889
- JP-A- 2000 318 664

## Beschreibung

Die Erfindung betrifft ein Transportskid nach dem Oberbegriff des Anspruchs 1.

In der weltweiten Automobilindustrie werden Bauteile, wie Motoren, Karossen und andere Werkstücke auf Kufen-Gestellen, sog. Transportskids, mit Rollenbahnen und anderen Stetig-Förderern durch die Produktionsanlagen gefahren. Diese Art der Fördertechnik findet man in allen Bereichen einer Automobilfabrik. Beginnend im Rohbau, über die Lackieranlagen bis hin zur Endmontage kommen sie zum Einsatz. In einem Werk können durchaus über 1000 solcher Transportskids in Gebrauch sein. Für die unterschiedlichen Modelreihen der einzelnen Automarken müssen aufgrund der verschiedenen Abmessungen und Gewichte der Fahrzeuge die Transportskids individuell gestaltet werden. Früher brachten Automobilhersteller ca. alle 72 Monate ein neues Modell auf den Markt, heute geschieht dies in wesentlich kürzerer Zeit. Auch werden die Fahrzeuge, aufgrund ihrer Größe (z.B. SUV) und der neuen Elektroantriebe immer schwerer. Dies hat zur Folge, dass vorhandene Förderanlagen ihre Kapazitätsgrenzen erreichen und der Energieverbrauch sich entsprechend erhöht.

Gegenwärtig sind Transportskids zumeist aus Stahl als Schweißkonstruktion ausgeführt. Nachteilig ist hierbei das hohe Eigengewicht solcher Stahlskids. Bei einem Modellwechsel sind diese dann anzupassen. Die Transportskids werden dazu auseinandergeschnitten und entsprechend den neuen Vorgaben wieder zusammengeschweißt. Der Schweißvorgang führt häufig zu Thermospannungen, die dann ein aufwendiges Richten und spannungsfreies Nachglühen erforderlich machen. Durch diese thermische Behandlung wird die Lackierung beschädigt und daher müssen die Transportskids für eine neue Lackierung vorbehandelt werden. Das erreicht man durch Sandstrahlen oder Abschleifen. Anschließend erfolgt die Neulackierung Von Der CN 104 889 643 A ist ein Transportskid bekannt, von dem die Erfindung ausgeht.

Dieses Prozedere ist sehr aufwändig.

Aufgabe der vorliegenden Erfindung ist es daher, ein Transportskid der eingangs genannten Art zu schaffen, mit welchem die geschilderten Nachteile vermieden werden. Gelöst wird diese Aufgabe durch ein Transportskid mit den Merkmalen des Anspruchs 1. Vorteilhafte Ausführungsformen finden sich in den abhängigen Ansprüchen.

Der Erfindung liegt der Gedanke zugrunde, ein Transportskid zu schaffen, welches als Schraubkonstruktion gestaltet ist. Verglichen mit herkömmlichen geschweißten Transportskids können erfindungsgemäße Transportskids etwa bei einem Modelwechsel oder Veränderungen des Transportgutes ohne großen Aufwand angepasst werden, wobei Hauptbaugruppen ggf. unverändert weiterbenutzt werden können. Zudem können die hohen Anforderungen an die Maßgenauigkeit der Fahrzeug- oder Teile-Aufnahmen auf dem Transportskid erfüllt werden, da ein aufwändiges Richten und durch den Schweißvorgang bedingte thermische Spannungen im Material entfallen. Zudem wird eine neuerliche Oberflächen-Beschichtung oder Lackierung vermieden.

Dazu ist erfindungsgemäß ein Transportskid zum Transportieren von Fahrzeugen oder Fahrzeugteilen durch Fertigungsstraßen in einer Transportrichtung vorgesehen, welches zwei miteinander verbundene, sich mit ihrer Hauptlängserstreckungsrichtung parallel zur Transportrichtung erstreckende Längsträger aufweist. Diese sind über in Transportrichtung voneinander beabstandete Querverbinder miteinander verbunden. Dabei sind an den Längsträgern erste Aufnahmen zur Ablage eines Fahrzeugs oder Fahrzeugteils angebracht. Erfindungsgemäß weisen dabei die Längsträger und die Querverbinder und die ersten Aufnahmen Konstruktionsprofile auf. Diese Konstruktionsprofile können Metallprofile, insbesondere Aluminiumprofile, aber auch solche aus Verbundwerkstoff, insbesondere Leichtbauverbundwerkstoff, sein. Die Konstruktionsprofile der Querverbinder und der ersten Aufnahmen sind mit den Konstruktionsprofilen der Längsträger durch eine Verschraubung verbunden. Insbesondere dienen die Träger bzw. Längsträger als Laufkufen für das Transportskid.

Neben den ersten Aufnahmen, die z. B. zur Aufnahme von zu transportierenden Werkstücken dienen, kann das Transportskid nach einer bevorzugten Ausführungsform Konstruktionsprofile umfassende zweite Aufnahmen zur Aufnahme eines weiteren Transportskids aufweisen. Auf diese Weise lassen sich mehrere Transportskids stapeln. Dabei sind insbesondere Konstruktionsprofile der zweiten Aufnahmen mit den Konstruktionsprofilen der Längsträger durch eine Verschraubung verbunden.

Nach einer weiteren erfindungsgemäßen Ausführungsform kann vorgesehen sein, dass wenigstens eine erste oder/und zweite Aufnahme gegenüber den Trägern klappbar ausgebildet ist. Durch das Klappen können die Transportskids noch platzsparender verstaut werden. Weiter kann vorgesehen sein, dass die genannten Aufnahmen auf Grundplatten, insbesondere solchen aus Aluminium, befestigt sind. Die Aufnahmen können dann als Ganzes mit den Längsträgern verschraubt sein. Dies ermöglicht, die Aufnahmen stufenlos zu verstellen, was die Flexibilität des erfindungsgemäßen Transportskids noch einmal deutlich erhöht.

Besonders vorteilhaft ist es, wenn wenigstens eines der Metallprofile ein Aluminiumsprofil oder ein Verbundwerkstoffprofil, insbesondere Leichtbauverbundwerkstoff, ist. Bevorzugt sind alle verwendeten Konstruktionsprofile Aluminium-Profile und/oder Verbundwerkstoffprofile. Auf diese Weise lässt sich das Gewicht des Transportskids gegenüber herkömmlichen geschweißten Stahlskids leicht um 30-40 % reduzieren. Mit einem so konfigurierten Transportskid ist man nicht nur besonders flexibel hinsichtlich des Umbaus für weitere Fahrzeugtypen, sondern durch die Gewichtseinsparung auch in der Lage, der ständig steigenden Masse der Fahrzeuge Rechnung zu tragen, insbesondere wenn Elektroantriebe mit schweren Batterien verbaut werden. Insbesondere beim Einsatz von Aluminiumsstranggussprofilen lässt sich eine besonders gute Maßhaltigkeit erreichen und Spannungen oder starke Toleranzen im Material - wie sie zum Beispiel bei Stahlprofilen auftreten können - von vornherein vermeiden.

Nach einer bevorzugten Ausführungsform der vorliegenden Erfindung kann vorgesehen sein, dass ein oder mehrere Metallprofile über Winkelverbinder miteinander verschraubt sind. Durch die Verwendung von Winkelverbindern lässt sich insbesondere das so aufgebaute Transportskid zusätzlich aussteifen, sodass das Transportskid sich nicht während des Betriebes verformen kann und ein gewünschtes Maß gewährleistet werden kann.

Weiter kann vorgesehen sein, dass an wenigstens einem Ende der Träger Anlaufpuffer angeordnet, insbesondere angeschraubt sind. Die Anlaufpuffer können beispielsweise aus Kunststoff ausgebildet sein.

Die Erfindung erlaubt eine vollständige Modularisierung von Transportskids, so dass die einzelnen Bauteile des Transportskids flexibel und modular zusammengebaut, insbesondere verschraubt werden können. Die einzelnen Module können beispielsweise mit unterschiedlichen Abmessungen vorgehalten werden, um das Transportskid umrüsten zu können. Beispielsweise können Querverbinder unterschiedlicher Länge auf Lager gehalten werden, um die Spurweite des Transportskids je nach Anforderung zu verändern und damit die Transportskids in allen Fertigungsbereichen einsetzen. Natürlich können weitere Aufbauten, Bauteile und Profile modular vorgehalten werden, so dass ein komplett flexibles System mit minimalen Umrüstzeiten entsteht.

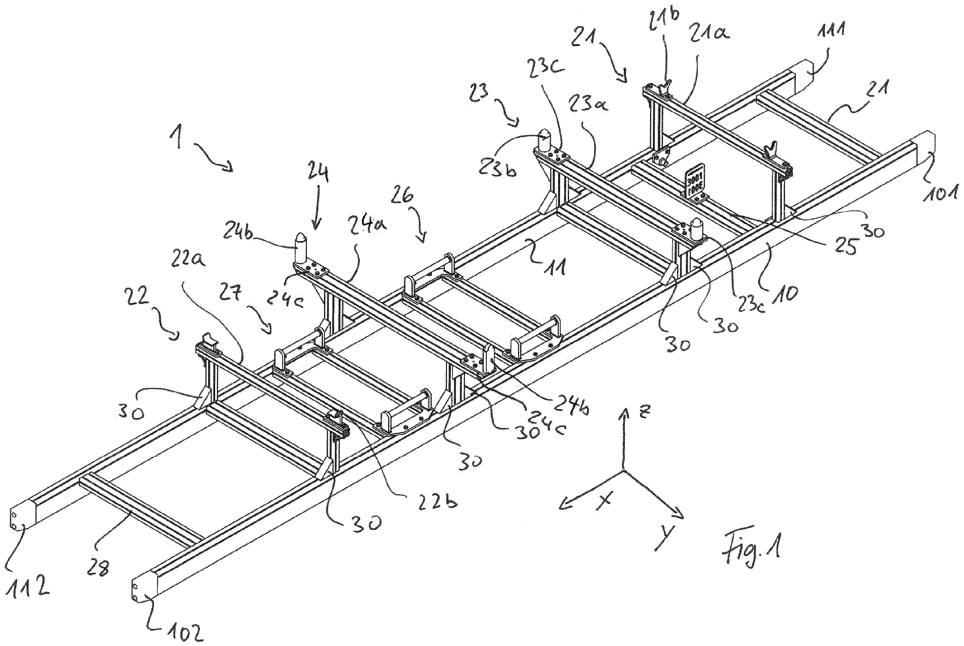

Die Erfindung wird nachfolgend anhand des in der Figur 1 gezeigten Ausführungsbeispiels näher erläutert.
- Figur 1: - zeigt eine perspektivische Ansicht auf ein beispielhaftes erfindungsgemäßes Transportskid.

Die in Figur 1 dargestellten Komponenten müssen nicht alle vorhanden sein, obligatorisch sind lediglich die beiden als Laufkufen dienenden, sich in der Hauptlängserstreckung X erstreckenden Längsträger 10, 11 sowie wenigstens zwei die beiden Längsträger 10, 11 miteinander verbindende Elemente, welche insbesondere als Querverbinder 21, 25, 28 ausgebildet sein können. Ferner ist obligatorisch wenigstens eine Aufnahme 23, 24 zur Aufnahme eines Werkstücks. Die Querverbinder 21,25, 28 erstrecken sich mit ihrer Hauptlängserstreckungsrichtung bevorzugt in Querrichtung Y, insbesondere senkrecht zur Richtung X und der Vertikalrichtung Z.

Die Längsträger 10, 11 sind mittels der angeschraubten Querverbinder, die wie auch die Längsträger 10, 11 bevorzugt aus Aluminiumprofilen oder Verbundwerkstoffprofilen gebildet sind, verbunden. Die verwendeten Konstruktionsprofile können handelsüblich sein. Die Parallelität der Längsträger 10, 11 kann beispielsweise durch auf CNC-Maschinen erfolgendes passgenaues Ablängen der verwendeten Konstruktionsprofile sichergestellt werden.

Die weiteren Aufbauten 21, 22, 24, 26, 27 des Transportskids 1 weisen bevorzugt ebenfalls, insbesondere auf CNC-Maschinen abgelängte Konstruktionsprofile auf, die ebenfalls aus Aluminium gebildet sind können. Zur Aussteifung der Konstruktion können handelsübliche Winkel- und Schraubverbinder 30 verwendet werden.

Um die Stapelbarkeit des Transportskids zu ermöglichen, können Stapalaufbauten 21, 22, insbesondere Stapelholme 21a, 22a aus Konstruktionsprofilen, insbesondere Aluminiumprofilen oder Verbundwerkstoffprofilen, auf die Längsträger 10, 11 geschraubt werden. Diese Stapelaufbauten 21, 22 sind in Längsrichtung X voneinander beabstandet. Zur automatischen Stapelung können an den Stapelaufbauten Aufnahmetaschen 21b, 22b vorgesehen sein.

Die Werkstück-Aufnahmen 23, 24 weisen Aufnahmeabschnitte 23b, 24b auf, die bevorzugt auf einer Grundplatte 23c, 24c befestigt sind, welche ihrerseits an Aufnahmeholmen 23a, 24a angeschraubt ist. So können die Aufnahmeabschnitte 23b, 24b stufenlos in Richtung Y quer zu den Längsträgern 10, 11 verstellt werden.

Das in Figur 1 beispielhaft dargestellte Transportskid 1 weist zwei als Laufkufen ausgebildete Längsträger 10, 11 mit vier angeschraubten Kunststoff-Anlaufpuffern 101, 102, 111, 112 auf. Die Laufkufen sind hier über geschraubte Querverbinder 21, 25, 28 miteinander verbunden. Auf die Laufkufen 10, 11 sind Stapelholme 21, 22 und Fahrzeug-Werkstück-Aufnahmen 23, 24 mit Aufnahmeholmen 23a, 24a aufgeschraubt. Die Aufnahmeabschnitte 23b, 24b sind hier mit Aluminiumplatten 23c, 24c auf die Aufnahmeholme 23a, 24a geschraubt und bevorzugt verstiftet. Zum Aussteifen des gesamten Systems werden an den erforderlichen Stellen Winkelverbinder 30 eingesetzt. Für die automatische Stapelbarkeit der Transportskids sind Stapelaufbauten 21, 22 aus Aluminiumprofilen auf die Laufkufen 10, 11 des Transportskids 1 geschraubt. Schließlich können an den Laufkufen 10, 11 in Richtung X voneinander beabstandet noch Eingriffabschnitte 26, 27 vorgesehen sein, die zum Anheben des Transportskids 1, beispielsweise mit einem Hubstapler, dienen.

Die erfindungsgemäßen Transportskids 1 und ihre Bauteile sind modular aufgebaut, sodass sie jederzeit an sich verändernde Gegebenheiten angepasst werden können. Zudem kann bei Verwendung von Aluminium eine Gewichtsreduktion der Transportskids 1 von 30-40% erzielt werden, so dass entsprechend 30-40% schwerere Fahrzeuge darauf befördert werden können, ohne dass eine Anpassung der die Transportskids 1 fördernden Förderstrecken erfolgen muss.

## Patentansprüche

1. Transportskid (1) zum Transportieren von Fahrzeugen oder Fahrzeugteilen durch Fertigungsstraßen in einer Transportrichtung (X), aufweisend zwei miteinander verbundene, sich mit ihrer Hauptlängserstreckungsrichtung parallel zur Transportrichtung (X) erstreckende Längsträger (10, 11), wobei die Längsträger (10, 11) über in Transportrichtung (X) voneinander beabstandete Querverbinder (21, 25, 28) miteinander verbunden sind, wobei an den Längsträgern (10, 11) erste Aufnahmen (23, 24) zur Ablage eines Fahrzeugs oder Fahrzeugteils angebracht sind,
**dadurch gekennzeichnet,**
**dass** die Längsträger (10, 11) und die Querverbinder (21, 25, 28) und die ersten Aufnahmen (23, 24) Konstruktionsprofile, insbesondere Metallprofile oder Verbundwerkstoffprofile, aufweisen, wobei Konstruktionsprofile der Querverbinder (21, 25, 28) und der ersten Aufnahmen (23, 24) mit den Konstruktionsprofilen der Längsträger (10, 11) durch eine Verschraubung verbunden sind.

2. Transportskid (1) nach Anspruch 1,
**dadurch gekennzeichnet,**
**dass** es Konstruktionsprofile umfassende zweite Aufnahmen (21, 22) zur Aufnahme eines weiteren Transportskids (1) aufweist, wobei Konstruktionsprofile der zweiten Aufnahmen (21, 22) mit den Konstruktionsprofilen der Längsträger (10, 11) durch eine Verschraubung verbunden sind.

3. Transportskid (1) nach einem der vorigen Ansprüche,
**dadurch gekennzeichnet,**
**dass** wenigstens eine erste oder/und zweite Aufnahme gegenüber den Trägern (10, 11) klappbar ausgebildet ist.

4. Transportskid (1) nach einem der vorigen Ansprüche,
**dadurch gekennzeichnet,**
**dass** wenigstens eines der Konstruktionsprofile, bevorzugt die Konstruktionsprofile, Aluminium-Profile oder Verbundwerkstoffprofile, insbesondere Leichtbau-Verbundwerkstoffprofile, sind.

5. Transportskid (1) nach einem der vorigen Ansprüche,
**dadurch gekennzeichnet,**
**dass** Konstruktionsprofile über Winkelverbinder (30) miteinander verschraubt sind.

6. Transportskid (1) nach einem der vorigen Ansprüche,
**dadurch gekennzeichnet,**
**dass** an wenigstens einem Ende der Träger (1) Anlaufpuffer (101, 111, 102, 112) angeordnet, insbesondere angeschraubt, sind.

## Claims

1. Transport skid for transporting vehicles or vehicle parts in a transport direction (X) through production lines, comprising two longitudinal beams (10, 11) connected to one another and extending with their main longitudinal extension direction parallel to the transport direction (X), wherein the longitudinal beams (10, 11) are connected to one another via cross connectors (21, 25, 28) which are spaced from one another in the transport direction (X), wherein first receptacles (23, 24) are attached to the longitudinal beams (10, 11) for receiving a vehicle or vehicle parts,
**characterised in**
**that** the longitudinal beams (10, 11) and the cross connectors (21, 25, 28) and the first receptacles (23, 24) have structural profiles, in particular metal profiles or composite material profiles wherein the structural profiles of the cross connectors (21, 25, 28) and of the first receptacles (23, 24) are connected by screws to the structural profiles of the longitudinal beams (10, 11).

2. Transport skid (1) according to claim 1,
**characterised in**
**that** it has second receptacles (21, 22) comprising structural profiles to receive a further transport skid (1) wherein structural profiles of the second receptacles (21, 22) are connected by screws to the structural profiles of the longitudinal beams (10, 11).

3. Transport skid (1) according to one of the preceding claims;
**characterised in**
**that** at least a first and/or a second receptacle is configured to fold with respect to the beams (10, 11).

4. Transport skid (1) according to one of the preceding claims,
**characterised in**
**that** at least one of the structural profiles, preferably all the structural profiles, are aluminium profiles or composite material profiles, in particular lightweight composite material profiles.

5. Transport skid (1) according to one of the preceding claims,
**characterised in**
**that** the structural profiles are screwed to one another via angled connectors (30).

6. Transport skid (1) according to one of the preceding claims,
**characterised in**
**that** tapered buffers (101, 111, 102, 112) are arranged on, in particular screwed to, at least one end of the beams (1).

## Revendications

1. Patin de transport (1) pour le transport de véhicules ou de pièces de véhicules à travers des lignes de production dans une direction de transport (X), comportant deux longerons (10, 11), reliés les uns aux autres, s'étendant parallèlement à la direction de transport (X) avec leur principale direction d'extension longitudinale, dans lequel les longerons (10, 11) sont reliés les uns aux autres par des connecteurs transversaux (21, 25, 28), espacés les uns des autres dans la direction de transport (X), dans lequel des premiers moyens de réception (23, 24) sont montés aux longerons (10, 11) pour la pose d'un véhicule ou d'une pièce de véhicule,
**caractérisé en ce**
**que** les longerons (10, 11) et les connecteurs transversaux (21, 25, 28) et les premiers moyens de réception (23, 24) comportent des profilés de construction, surtout des profilés métalliques ou des profilés en matériau composite, dans lequel des profilés de construction des connecteurs transversaux (21, 25, 28) et des premiers moyens de réception (23, 24) sont reliés aux profilés de construction des longerons (10, 11) par vissage.

2. Patin de transport (1) selon la revendication 1,
**caractérisé en ce**
**qu'**il comporte des seconds moyens de réception (21, 22), comprenant des profilés de construction pour la réception d'un autre patin de transport (1), dans lequel des profilés de construction des seconds moyens de réception (21, 22) sont reliés aux profilés de construction des longerons (10, 11) par vissage.

3. Patin de transport (1) selon l'une quelconque des revendications précédentes,
**caractérisé en ce**
**qu'**au moins un premier ou/et un second moyen de réception est formé de manière pliable par rapport aux longerons (10, 11).

4. Patin de transport (1) selon l'une quelconque des revendications précédentes,
**caractérisé en ce**
**qu'**au moins un des profilés de construction, de préférence les profilés de construction, sont des profilés d'aluminium ou des profilés en matériau composite, surtout des profilés en matériau composite en construction légère.

5. Patin de transport (1) selon l'une quelconque des revendications précédentes,
**caractérisé en ce**
**que** les profilés de construction sont vissés les uns aux autres par des connecteurs coudés (30).

6. Patin de transport (1) selon l'une quelconque des revendications précédentes,
**caractérisé en ce**
**qu'**au moins sur une extrémité des porteurs (1) des tampons de démarrage (101, 111, 102, 112) sont agencés, surtout vissés.
